# EUROPEAN PATENT SPECIFICATION

(11) **EP 1 879 447 B1**
(45) Date of publication and mention of the grant of the patent: **06.08.2008**
(21) Application number: 06724089.5
(22) Date of filing: 06.04.2006
(51) Int. Cl.: A01K 31/17

(54) **SMALL AVIARY WITH INTEGRATED FEED ARRANGEMENT**
KLEINE VOLIERE MIT INTEGRIERTER FÜTTERANORDNUNG
PETIT POULAILLER À STRUCTURE D'ALIMENTATION INTÉGRÉE

(30) Priority: 07.04.2005 DE 202005005594 U
(43) Date of publication of application: 23.01.2008
(73) Proprietor: MELLER ANLAGENBAU GMBH, 49324 Melle (DE)
(72) Inventor: KREYER, Rudolf, 49324 Melle (DE)
(74) Representative: Bobzien, Hans Christoph
(86) International application number: PCT/EP2006/003144
(87) International publication number: WO 2006/136219

(56) References cited:
- EP-A- 1 149 528
- DE-A1- 2 102 939
- US-A- 3 785 345

## Description

The Invention concerns an aviary, in particular a small aviary for keeping young and laying hens comprising a base surface having transverse and longitudinal edges, a mesh, a wall or the like surrounding the base surface for forming a closed-off internal space, a first feed device which extends at least partly along the transverse and/or longitudinal edges, and a media guide device extending through the internal space.

The base surface Is usually between 750 and 1200 cm² per animal. Usually a number of animals are kept In the small aviary. Within the small aviary the animals are fed and watered and can lay their eggs which are discharged laterally by way of suitable devices.

The limited feeding length of the first feed device, over the base surface of the small aviary, limits the number of animals to be kept in such a small aviary. A new EU Directive states that 10/12 cm per animal of feeding length must now be provided in order to ensure that the animals are kept appropriately according to species. A device of this kind is disclosed in EP 1 149 528. However, this device is very complex and involves many moving parts which can malfunction.

Therefore the problem of the present Invention is to increase the feeding area within a small aviary of the general kind set forth.

In accordance with the invention that problem is solved in that the media guide device is In the form of a second feed device and in that a feed trough comprises a shaped sheet metal member with laterally upwardly angled longitudinal limbs, which extends beneath the media guide device. The configuration according to the invention thus provides that it is possible for feed purposes to use not only the longitudinal edges of the small aviary but also the area beneath the media guide device. As the media guide device usually extends in the longitudinal direction through the entire small aviary, the feeding area available is thus doubled as the animals can feed on both sides at the media guide device.

It is a particularly attractive matter in regard to the solution according to the invention that it Increases the feeding length even in small aviaries with a plurality of levels. Frequently Intermediate floors which are fitted in small aviaries of that kind are only fixed at one side to a side wall. In the case of the known feed devices which extend only at the longitudinal side at the outside longitudinal edges of the small aviary, it was accordingly only possible in the state of the art to provide for feeding the animals at one side, at the outside, at those intermediate floors. The fact that the media guide means which is in the form of the second feed device can extend through the small aviary at any locations means that it is thus possible for the first time for the feed on the intermediate floor which is fixed at one side to be implemented at the outside and the Inside by way of the media guide device which is adapted for feed purposes. Thus the feeding area is considerably increased even in those small aviaries with an intermediate floor, without Involving structural reconfiguration of the aviary itself.

Preferably the media guide device has an outer tube extending through the internal space, with a continuous conveyor arranged therein, and a media outlet opening. In accordance with the Invention in that case a feed trough is additionally arranged beneath the media outlet opening which is present in any case, in the outer tube. In the simplest case that feed trough [can] comprises a shaped sheet metal member with laterally upwardly angled longitudinal limbs, which extends beneath the media guide device. The feed then drops through the media outlet opening on to that feed trough so that the animals can go to the feed trough from both sides.

The feed trough can either extend over the entire small aviary or lateral separating walls can additionally be provided for holding the feed trough under the media guide device.

The media guide device is usually in the form of a conveyor screw or in the form of a conveyor spiral; In general terms accordingly this Involves a continuous conveyor.

In a development it is provided that the height of the feed level on the feed trough is variable by altering the spacing between the media guide device and the feed trough. In the simplest configuration that is effected by mounting means at different heights, into which the feed trough can be fitted. The spacing can thus be varied between about 15 mm and about 30 mm; preferably the spacing between the underside of the media guide device and the top side of the feed trough is 25 mm. If the feed trough is arranged closer to the media outlet opening, the rising level of feed prevents the feed from further dropping out on to the feed trough. In a technically polished development the height of the feed trough can be adjustable by machine, for example by way of a spindle drive.

The invention is described hereinafter by means of a preferred embodiment, with reference to the accompanying drawing in which:

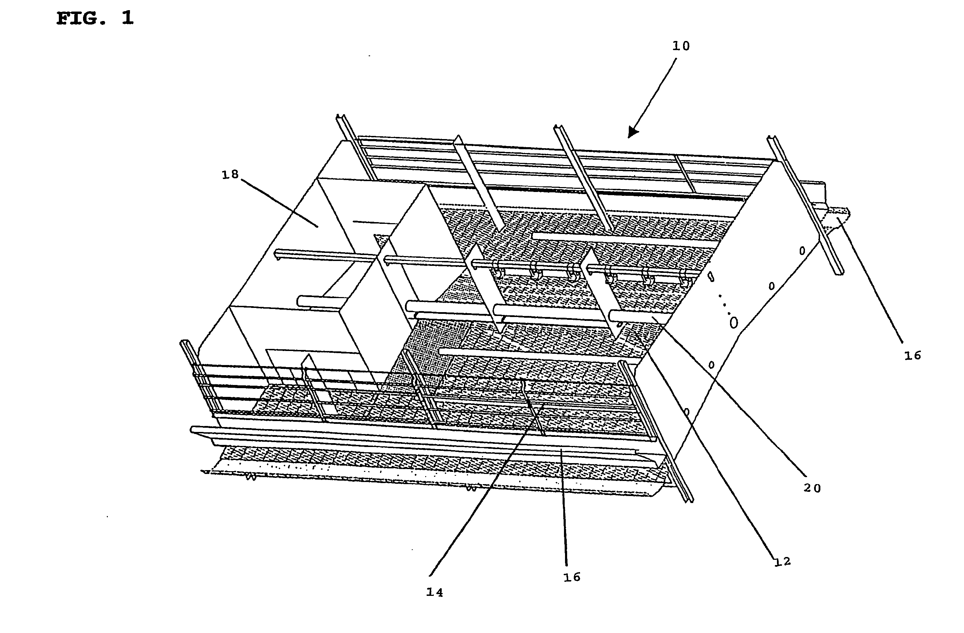

Figure 1 shows a section through a perspective view of a small aviary designed in accordance with the invention,

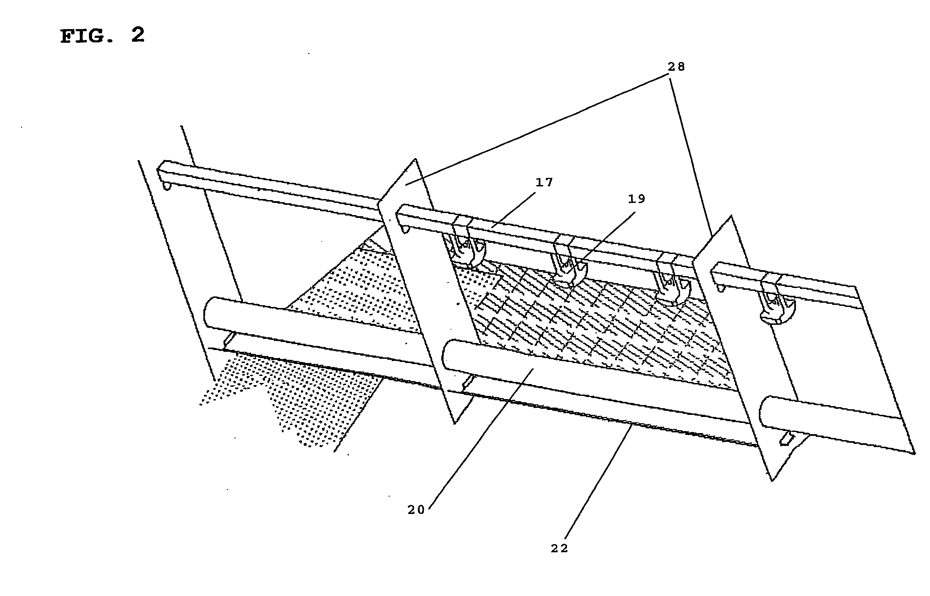

Figure 2 is a perspective view on an enlarged scale of the feed device according to the invention, and
Figure 3 is a view in cross-section on an enlarged scale through the feed device according to the invention.

Accordingly the small aviary 10 according to the invention comprises a base surface 12 comprising fine mesh, a longitudinal mesh 14 enclosing the longitudinal sides of the base surface 12, lateral guide devices 16 which extend along the longitudinal mesh 14 and which represent the first feed device, and a conveyor screw 20 which extends through the centre of the internal space and which forms the media guide device. In order better to illustrate the invention, the small aviary is shown in a section through the centre of the internal space, which is closed in itself, for receiving the animals.

Provided therebeside at one end is a box-like laying nest 18. A plurality of drinking troughs 19 are suspended above the conveyor screw 20 on a bar 17 extending in the longitudinal direction.

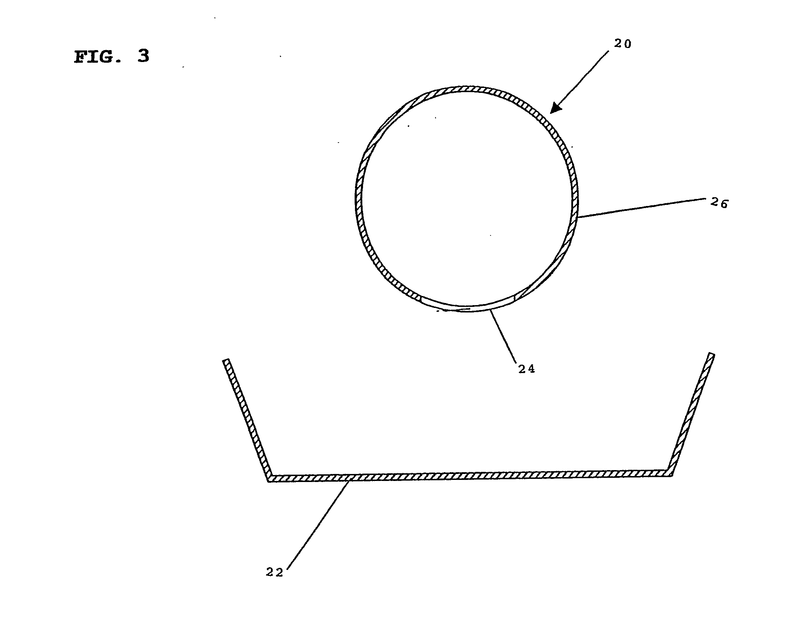

Figure 3 shows the configuration according to the invention of the media guide device, in the form of a feed device. The conveyor screw has been removed from the outer tube 26 and is not shown in Figure 3. The outer tube 26 of the conveyor screw 20 has at its end at the underside a media outlet opening 24 which also functions as a feed outlet opening. The feed is transported by way of the conveyor screw 20 to the media outlet opening 24 and drops on to the trough 22 arranged at a spacing beneath the conveyor screw 20.

That trough 22 comprises a shaped sheet metal member which extends beneath the entire direction of extent in the small aviary 10 and which has laterally upwardly angled side limbs. To enhance the level of stability, the conveyor screw 20 and the trough 22 are guided in the separating walls 28. Those separating walls 28 are fixed at the top and bottom to the small aviary.

The configuration according to the invention makes it possible, with the specified means, to increase the feeding area in the small aviaries, without complicated and expensive conversion procedures being required. This means that existing small aviaries can also be subsequently fitted with the arrangement according to the invention in order to increase the feeding area.

### List of references

- 10: small aviary
- 12: base surface
- 14: longitudinal mesh
- 16: lateral feed device
- 18: laying nest
- 19: drinking trough
- 20: conveyor screw
- 22: trough
- 24: media outlet opening
- 26: outer tube
- 28: separating wall

## Claims

1. An aviary (10), In particular a small aviary, for keeping young and laying hens, comprising
- a base surface (12) having transverse and longitudinal edges,
- a mesh (14), a wall or the like surrounding the base surface (12) for forming an enclosed internal space,
- a first feed device which extends at least partly along the transverse and/or longitudinal edges, and
- a media guide device (20) extending through the internal space, **characterised in that**
- the media guide device (20) is in the form of a second feed device
- and **in that** a feed trough comprises a shaped sheet metal member with laterally upwardly angled longitudinal limbs, which extends beneath the media guide device.

2. An aviary (10) according to claim 1 wherein the media guide device (20) includes an outer tube (26) extending through the internal space, with a continuous conveyor arranged therein and a media outlet opening (24), **characterised in that** a feed trough (22) is arranged beneath the media outlet opening (24).

3. An aviary (10) according to claim 2 **characterised in that** the feed trough is in the form of a longitudinal feed trough.

4. An aviary (10) according to claim 2 or claim 3 **characterised in that** the feed trough (22) extends between two separating walls (28).

5. An aviary (10) according to one of claims 3 and 4 **characterised in that** the feed trough (22) extends through the entire internal space of the small aviary (10).

6. An aviary (10) according to one of the preceding claims **characterised in that** the spacing of the feed trough (22) from the media guide device (20) is variable.

## Patentansprüche

1. Voliere (10), insbesondere Kleinvoliere, für die Haltung von Jung- und Legehennen mit
- einer Quer- und Längskanten aufweisenden Grundfläche (12),
- einem die Grundfläche (12) umschließenden Gitter (14), einer Wand oder dergleichen zur Bildung eines umschlossenen Innenraums,
- einer ersten Füttereinrichtung, die sich zumindest teilweise entlang der Quer- und/oder Längskanten erstreckt,
- sowie einer durch den Innenraum verlaufenden Medienführungseinrichtung (20), **DADURCH GEKENNZEICHNET,**
- **dass** die Medienführungseinrichtung (20) als zweite Füttereinrichtung ausgebildet ist
- und **dass** ein Futtertrog ein Metallblech mit seitlich nach oben gewinkelten Schenkeln umfasst, das sich unterhalb der Medienführungseinrichtung erstreckt.

2. Voliere (10) nach Anspruch 1, wobei die Medienführungseinrichtung (20) ein sich durch den Innenraum erstreckendes Außenrohr (26) mit einem darin angeordneten Stetigförderer und einer Medienaustrittsöffnung (24) umfasst, **DADURCH GEKENNZEICHNET, dass** unterhalb der Medienaustrittöffnung (24) ein Futtertrog (22) angeordnet ist.

3. Voliere (10) nach Anspruch 2, **DADURCH GEKENNZEICHNET, dass** der Futtertrog als Längs-Futtertrog ausgebildet ist.

4. Voliere (10) nach Anspruch 2 oder 3, **DADURCH GEKENNZEICHNET, dass** sich der Futtertrog (22) zwischen zwei Trennwänden (28) erstreckt.

5. Voliere (10) nach einem der Ansprüche 3 bis 4, **DADURCH GEKENNZEICHNET, dass** sich der Futtertrog (22) durch den gesamten Innenraum der Kleinvoliere (10) erstreckt.

6. Voliere (10) nach einem der vorhergehenden Ansprüche, **DADURCH GEKENNZEICHNET, dass** der Abstand des Futtertrogs (22) von der Medienführungseinrichtung (20) veränderbar ist.

## Revendications

1. Une volière (10), en particulier une petite volière, pour l'élevage des jeunes poules et des poules pondeuses, comprenant
- une surface de base (12) possédant des angles transversaux et longitudinaux,
- un grillage (14), un mur ou similaire qui entoure la surface de base (12) pour former un espace intérieur fermé,
- un premier dispositif d'alimentation qui s'étend au moins en partie le long des angles transversaux et/ou longitudinaux, et
- un dispositif de guidage média (20) qui s'étend à travers l'espace intérieur, **caractérisé par le fait**
- **que** le dispositif de guidage média (20) a la forme d'un deuxième dispositif d'alimentation
- et **qu'**une auge d'alimentation comporte une partie métallique en tôle moulée avec des membres à angle longitudinal longeant latéralement vers le haut, qui s'étend derrière le dispositif de guidage média.

2. Une volière (10) conforme aux descriptions indiquées au point 1, sur laquelle le dispositif de guidage média (20) comporte un tube externe (26) qui s'étend à travers l'espace intérieur, et qui possède un convoyeur continu placé à l'intérieur et un orifice de sortie média (24) ; cette volière est **caractérisée par le fait qu'**une auge d'alimentation (22) est placée derrière l'orifice de sortie média (24).

3. Une volière (10) conforme aux descriptions indiquées au point 2, **caractérisée par le fait que** l'auge d'alimentation a la forme d'une auge d'alimentation longitudinale.

4. Une volière (10) conforme aux descriptions indiquées au point 2 ou au point 3, **caractérisée par le fait que** l'auge d'alimentation (22) s'étend entre deux cloisons de séparation (28).

5. Une volière (10) conforme aux descriptions indiquées au point 3 ou au point 4, **caractérisée par le fait que** l'auge d'alimentation (22) s'étend à travers l'ensemble de l'espace intérieur de la petite volière (10).

6. Une volière (10) conforme aux descriptions indiquées à l'un des points précédents, **caractérisée par le fait que** l'espacement de l'auge d'alimentation (22) par rapport au dispositif de guidage média (20) est variable.
